# FASCICULE DE BREVET EUROPEEN

(11) **EP 2 197 288 B1**
(45) Date de publication et mention de la délivrance du brevet: **23.01.2019**
(21) Numéro de dépôt: 08841157.4
(22) Date de dépôt: 09.10.2008
(51) Int. Cl.: A23C 19/08, A23C 19/082

(54) **UTILISATION D'ÉMULSIFIANTS ANIONIQUES POUR AUGMENTER LA FERMETÉ DE FROMAGES FONDUS PRÉSENTANT UN EXTRAIT-SEC DE 40 % OU MOINS**
VERWENDUNG VON ANIONISCHEN EMULGATOREN ZUR ERHÖHUNG DER FESTIGKEIT VON SCHMELZKÄSEPRODUKTEN MIT EINEM FESTSTOFFGEHALT VON 40% ODER WENIGER
USE OF ANIONIC EMULSIFIERS FOR INCREASING THE FIRMNESS OF PROCESSED CHEESE PRODUCTS WITH A SOLIDS CONTENT OF 40% OR LESS

(30) Priorité: 11.10.2007 FR 0758216
(43) Date de publication de la demande: 23.06.2010
(73) Titulaire: Fromageries Bel, 92150 Suresnes (FR)
(72) Inventeur: MANERA, Rémy, F-39190 Saint-Agnes (FR)
(74) Mandataire: Lavoix
(86) Numéro de dépôt international: PCT/FR2008/051837
(87) Numéro de publication internationale: WO 2009/053627

(56) Documents cités:
- EP-A1- 0 491 299
- WO-A1-99/26482
- US-A- 3 697 292
- US-A1- 2003 017 242
- US-A1- 2006 093 723
- US-B1- 6 368 653
- ANONYMOUS: "CODEX GENERAL STANDARD FOR NAMED VARIETY PROCESS(ED) CHEESE AND SPREADABLE PROCESS(ED) CHEESE" INTERNET ARTICLE, [Online] XP002521215 Codex Standard 285-1978 Extrait de l'Internet: URL:http://www.vuatkerala.org/static/eng/a dvisory/animal_husb/ELibrary/Codex%20stand ards%20for%20Animal%20products/Codex%20for %20variety%20processed%20cheese.pdf> [extrait le 2009-03-26]
- F. Zuber ET AL: "Continuous emulsification and gelation of dairy ingredients by HTST extrusion cooking: production of processed cheeses", INTERNATIONAL JOURNAL OF FOOD SCIENCE AND TECHNOLOGY., vol. 22, no. 6, 1 December 1987 (1987-12-01), pages 607-626, XP055225811, GB ISSN: 0950-5423, DOI: 10.1111/j.1365-2621.1987.tb00529.x

## Description

La demande décrit l'utilisation d'émulsifiants anioniques dans la préparation de fromage fondu présentant un extrait-sec ≤ 40 % pour augmenter la fermeté dudit fromage fondu.

La demande décrit également des fromages fondus ayant un extrait-sec ≤ 40 % contenant au moins un émulsifiant anionique ainsi que le procédé de fabrication de tels fromages fondus.

Les « fromages fondus », ou « spécialités fromagères fondues » sont des produits obtenus par la fonte, sous traitement thermique, et généralement sous vide partiel, de fromages, en présence ou non des sels de fonte.

Les fromages qui constituent la matière première utilisée dans la fonte peuvent être n'importe quels fromages naturels, c'est-à-dire des fromages obtenus directement par coagulation du lait et/ou de concentrés laitiers (première transformation du lait ou de concentrés laitiers). Il s'agit plus généralement de fromages à pâte pressée.

Les fromages fondus peuvent comporter également d'autres produits laitiers tels que des concentrés protéiques de lait et/ou de lactosérum sous forme liquide ou en poudre, de la poudre de lait entier, partiellement ou totalement écrémé, de la matière grasse d'origine animale (matière grasse laitière anhydre, beurre, crème) et/ou végétale (matière grasse issue par exemple du soja, du colza, de l'arachide, du tournesol, huile de palme, de palmiste, de coprah). Le procédé de fabrication de tels produits est décrit par exemple dans le livre : « le Fromage » de A. ECK (Ed Lavoisier, 1997, p. 691 et suivantes).

Les fromages fondus se présentent essentiellement en barquettes ou sous forme de portions pour des usages à tartiner, en tranches pour des usages snacking ou culinaires, ou en blocs à trancher ou à râper.

La demande décrit plus particulièrement les produits à tartiner.

Les fromages fondus du type à tartiner sont des émulsions homogènes et stables ; les produits ont une durée de conservation qui peut atteindre un an, avec des périodes de hors-froid (température ambiante) prolongées.

De façon générale, les fromages fondus du commerce se caractérisent par un extrait-sec compris :
- entre 34 et 55 %, pour des produits ayant un taux de matière grasse (sur extrait-sec) compris entre 40 et 60 % et un taux de protéines compris entre 9 et 15%.
- entre 40 et 55 % pour des produits ayant un taux de matière grasse (sur extrait-sec) de 60-70 %, et un taux de protéines compris entre 8 et 12 %.
- entre 30 à 40% pour des produits allégés en matière grasse, c'est-à-dire présentant un taux de matière grasse sur extrait-sec compris entre 20 et 30 % et un taux de protéines compris entre 12 et 17 %.

Ces fromages fondus se caractérisent par une consistance relativement ferme, et d'une façon générale d'autant plus ferme que l'extrait-sec, donc le taux de protéines, est élevé, tout en gardant des aptitudes à la tartinabilité et un fondant en bouche.

A titre d'exemple la consistance, mesurée à 20°C, 8 jours après fabrication, par un test de pénétrométrie sur texturomètre LFRA-STEVENS (Equipements scientifiques, France) (sonde de diamètre 6,35 mm / course de 7mm / Pénétration de 0,2 mm/s) est compris entre 30 et 50 grammes pour des produits ayant un extrait-sec de 40 % et un taux de matière grasse sur extrait-sec (G/S) 46 %.

Toutefois, pour les formules de plus faibles extrait-sec, ce qui est le cas des produits allégés en matière grasse et surtout de formules dites « économiques » (c'est-à-dire, présentant un taux de protéines réduit), la fermeté diminue. Les fromages fondus sont plus mous et peuvent coller à l'emballage (notamment pour des portions conditionnées sous aluminium ou des produits en barquettes ou pots de verre).

Or, dans le cadre des nouvelles politiques nutritionnelles visant à réduire l'apport en lipides des consommateurs pour lutter contre l'obésité, la fabrication de produits allégés, de bonne qualité, et qui présentent de bonnes caractéristiques organoleptiques (texture) et fonctionnelles (tartinabilité), est particulièrement intéressante. D'autre part, il est important d'offrir des fromages fondus apportant les composés nutritionnels habituels du fromage (protéines, lipides, calcium) pour un coût modéré à destination de populations à faible pouvoir d'achat, et ceci en réduisant l'extrait-sec des fromages en diminuant la teneur des différents composants dont les protéines. Il est toutefois important, pour des produits appartenant à ces deux catégories, d'obtenir des fromages fondus plus fermes mais qui restent fondants en bouche.

Si l'emploi de produits texturants classiques, tels que des hydrocolloïdes (carraghénanes, gommes de guar ou de caroube), permet de résoudre le problème de la fermeté, les fromages fondus ainsi obtenus présentent une texture gélifiée peu favorable à la tartinabilité.

De façon tout à fait inattendue, la demanderesse a montré qu'il est possible d'obtenir des fromages fondus à faible extrait-sec (c'est-à-dire à teneur réduite en matières grasses et/ou en protéines) qui présentent malgré tout une bonne fermeté, une bonne onctuosité en fondant en bouche et une bonne tartinabilité en utilisant des émulsifiants appartenant à la famille des émulsifiants anioniques.

On entend par émulsifiant anionique une molécule présentant un caractère amphiphile et dont la partie hydrophile contient un groupement ionisé chargé négativement.

Dans cette famille seront particulièrement appropriés :
a) les monoglycérides estérifiés par un acide organique, plus spécifiquement les ACETEM (esters acétique de monoglycérides), les CITREM (esters citrique de monoglycérides), les LACTEM (esters lactique de monoglycérides), les DATEM (esters diacétyl-tartrique de mono/diglycérides, additif E472e),
b) les esters d'acide lactique estérifié par les acides gras, plus spécifiquement les lactylates stéaroyl de sodium (SSL = E481) ou de calcium (CSL = E482),
c) ou un mélange de ceux-ci.

Ces émulsifiants sont commercialisés sous forme de poudre ou de pâte. On peut citer plus spécifiquement, comme ester diacétyl-tartrique de mono/diglycérides (DATEM) celui commercialisé par la société DANISCO sous la marque Panodan® (contenant 80 % de DATEM et 20 % de carbonate de calcium).

On peut citer comme CSL et SSL ceux fournis par la firme KERRY respectivement sous les marques Admul CSL 2010 (comprenant 4% de calcium) et Admul SSL 1078K (comprenant 4% de sodium).

Le DATEM est connu pour avoir des propriétés plus hydrophiles que les autres émulsifiants dérivés de monoglycérides, ces propriétés anioniques le rendant très réactifs avec des protéines, d'où son utilisation dans des émulsions protéiques. En particulier, cet émulsifiant est connu :
- pour améliorer le volume des produits et la machinabilité des pâtes, d'où son utilisation en panification pour améliorer, entre autres, le volume des pains ;
- pour résister à des traitements thermiques élevés, tels que le traitement UHT, voire des traitements de stérilisation. Ce produit est donc employé dans le domaine des émulsions, telles que les sauces froides ou chaudes, et les mayonnaises, pour améliorer la stabilité des émulsions aux traitements thermiques. Dans le cadre de cette application, on peut citer le brevet EP0716811 qui décrit l'utilisation de cet émulsifiant dans les sauces, mayonnaises et produits à tartiner où il est utilisé pour stabiliser le jaune d'oeuf lors des traitements thermiques élevés. On peut citer également le brevet EP0702902 qui décrit un procédé de fabrication d'une émulsion huile dans l'eau, stable thermiquement, qui contient de 0,1 à 5 % de DATEM en remplacement du jaune d'oeuf dans des sauces ou mayonnaises contenant du vinaigre.

L'utilisation de monoglycérides dans des fromages fondus a également été décrite, mais pour des objectifs spécifiques. La demande de brevet EP0382291 qui décrit ainsi que l'utilisation de monoglycérides, diglycérides et/ou phosphatides permet de limiter le relargage de matière grasse dans des formulations de fromages fondus contenant de la matière grasse végétale. En revanche, il n'est pas fait mention de l'utilisation de ces émulsifiants pour améliorer la fermeté des fromages fondus à faible extrait-sec.

Le SSL et le CSL sont préparés par estérification de l'acide lactique avec un mélange d'acides gras (acides palmitique et stéarique dans une proportion 1/1) en présence d'hydroxydes de calcium (CSL) ou sodium (SSL).

Le SSL est un émulsifiant universel, anionique, qui se disperse dans l'eau et qui est largement utilisé en boulangerie/panification et pour des émulsions huile dans l'eau. Il est d'un usage plus fréquent que le CSL, qui est utilisé également en boulangerie/panification.

Il n'est pas décrit que les esters d'acide lactique estérifié par les acides gras améliorent la fermeté des fromages fondus à faible extrait-sec (<45%, de préférence ≤ 40%, ou encore <40%). Lee BOU, dans une thèse sur « l'étude biochimique de la fonte des fromages » (Université de Nancy - 2001) a décrit la substitution de sels de fonte par du stéaroyl lactylate ou des esters de saccharose, pour un rôle de déstructuration des fromages en vue de la fonte ; les résultats se sont avérés négatifs, cette famille d'émulsifiants n'ayant pas joué un rôle de déstructuration des fromages.

L'utilisation des émulsifiants anioniques a été décrite dans d'autres documents pour leur emploi en fabrication de fromage fondu mais pour des applications et fonctionnalités spécifiques.

Ainsi, le brevet US 6 368 653 mentionne l'utilisation de phases mésomorphes comprenant un émulsifiant comestible au cours de la fabrication de produits fromagers, notamment pour remplacer de la matière grasse. Le brevet US 6 368 653 décrit l'exemple de la préparation d'un fromage fondu ayant un extrait-sec > 40 % et un extrait G/S < 20 % et contenant 2% de monoglycérides.

Il n'est pas mentionné l'utilisation de ces phases mésomorphes dans des fromages fondus à faible extrait-sec (<45%, de préférence ≤ 40%, ou encore <40%) pour en améliorer la viscosité et se substituer en partie aux protéines. De même le document US 2006/0093723 décrit l'utilisation d'émulsifiants organiques, tels que des mono- et diglycérides, dans la production de fromages fondus stables à température ambiante et ayant des qualités organoleptiques acceptables.

D'autre part, le brevet US 3 697 292 décrit l'utilisation de monoglycérides estérifiés pour la fabrication de fromages fondus mais dans le but d'augmenter, dans les formules de fonte, les quantités de fromage de réemploi, dans la mesure où l'objectif est le recyclage de fromages préalablement fondus dans lesdites formules. Les monoglycérides estérifiés, dont le DATEM, sont utilisés pour éliminer les inconvénients liés à l'utilisation de quantités importantes de réemploi, qui peuvent atteindre 100 % des formules, et plus spécifiquement l'épaississement des produits au moment du traitement thermique, ce qui limite la pompabilité du produit lors des opérations de dosage. Par ailleurs dans le procédé de la présente invention, si du fromage de réemploi est utilisé dans la fabrication de fromage fondu, c'est en tant qu'auxiliaire technologique pour faciliter le démarrage du « crémage » (prise de viscosité). Le réemploi est alors incorporé à des taux inférieurs à 5 % en poids de la formule.

Aucun de ces documents ne mentionne donc le rôle de ces émulsifiants anioniques comme remplaceurs de protéines dans des formules économiques pour améliorer la fermeté des formules à faible extrait-sec (≤ 40 %).

De façon inattendue, les émulsifiants anioniques décrits ici, en particulier le DATEM, le SSL ou le CSL, permettent d'augmenter la viscosité de formules à faible extrait-sec dans lesquelles ils peuvent se substituer aux protéines, permettant ainsi de réduire jusqu'à 30 % la teneur totale en protéines des formules.

Par ailleurs, la demanderesse a montré de façon inattendue que l'action de la famille d'émulsifiants anioniques était améliorée de manière synergique en présence d'hydrocolloÏïdes, plus spécifiquement de carraghénanes.
L'invention est telle que définie par les revendications.

### Utilisation d'un émulsifiant anionique pour augmenter la fermeté de fromages fondus présentant un extrait-sec ≤40 %

L'invention concerne l'utilisation d'au moins un ester diacétyl-tartrique de mono/diglycérides (DATEM) dans la préparation de fromage fondu présentant un extrait-sec ≤40 %, de préférence <40%, pour augmenter la fermeté dudit fromage fondu et pour réduire jusqu'à 30% la teneur totale en protéines de la formule dudit fromage fondu.

Les fromages fondus obtenus ont un extrait-sec de préférence ≤ 37 %, plus particulièrement ≤ 37 % si le G/S est compris entre 5 et 50 %. Préférentiellement, ledit fromage fondu présente un taux de matières grasses/extrait sec (G/S) compris entre 5 et 70 %, de préférence encore compris entre 5 et 55 % (bornes incluses).

Les fromages fondus concernent plus spécifiquement des fromages présentant les caractéristiques d'extrait-sec et de matières grasses (exprimé en gras/sec) suivantes :
- extrait-sec ≤ 33 % pour un G/S compris entre 5 et 30 %
- extrait sec ≤ 37 %, de préférence 33%< extrait sec ≤ 37 %, pour un G/S compris entre 30 et 50 %
- extrait sec ≤ 40%, de préférence 37%< extrait sec ≤ 40%, pour un G/S compris entre 50 et 70 %

Dans la famille des émulsifiants anioniques, on sélectionnera le DATEM en tant que mono/diglycéride estérifié par un acide organique.

Les monoglycérides estérifiés par un acide constituent les agents émulsifiants les plus communément utilisés dans le monde, cette famille d'additifs comprend : les ACETEM (esters acétique de monoglycérides), les CITREM (esters citrique de monoglycérides), les LACTEM (esters lactique de monoglycérides), les DATEM (esters diacétyl tartrique de mono/diglycérides).

L'invention concerne l'utilisation spécifique du DATEM.

D'après les résultats d'essais comparatifs de pénétrométrie réalisés par la demanderesse sur des fromages fondus incorporant, ou non, un mono/diglycéride estérifié par un acide organique, le gain de fermeté entre un fromage fondu témoin et un fromage fondu fabriqué en présence de 0,48 % de DATEM est d'au moins 20 %.

La « pénétrométrie » est la mesure de la résistance d'un objet à la pénétration en continu d'une tige de section cylindrique donnée, à une vitesse de pénétration donnée et une distance de course donnée. Dans le cadre de la présente demande, la pénétrométrie est mesurée sur un texturomètre LFRA-STEVENS (Equipements scientifiques, France), avec une sonde de 6,35 mm de diamètre, un enfoncement de 7 mm à une vitesse de 0,2 mm/s, à 20°C.

Les esters d'acide lactique estérifié par les acides gras incluent les esters d'acide lactique estérifié par les acides palmitique et stéarique en présence d'hydroxyde de sodium ou de calcium, et plus particulièrement les lactylates stéaroyl de sodium (SSL) et le lactylate stéaroyl de calcium (CSL).

D'après les résultats d'essais comparatifs de pénétrométrie réalisés par la demanderesse sur des fromages fondus incorporant, ou non, CSL ou du SSL, le gain de fermeté entre un fromage fondu témoin et un fromage fondu fabriqué en présence de 0,20 % de SSL ou de CSL est de 25 %.

La teneur du DATEM, dans le mélange d'ingrédients utilisé pour la préparation dudit fromage fondu peut être de 0,05 à 1 %, de préférence de 0,1 à 1 %, de préférence encore de 0,1 à 0,8 %, de préférence encore de 0,2 à 0,6 %, en poids par rapport au poids total du mélange.

L'invention concerne également l'utilisation du DATEM en association avec des hydrocolloïdes, en particulier mais non exclusivement des carraghénanes. En effet, une amélioration synergique de la fermeté est observée lorsque le DATEM est utilisé en combinaison avec un ou des hydrocolloïdes tels que des carraghénanes.

Les carraghénanes peuvent être incorporés dans le mélange d'ingrédients utilisé pour la préparation du fromage fondu à hauteur de 0,05 à 5%, de préférence de 0,1 à 3%, de préférence encore de 0,1 à 1%, en poids par rapport au poids total du mélange.

De préférence, la fermeté d'un fromage fondu obtenu par l'utilisation selon l'invention, mesurée par pénétrométrie, est supérieure d'au moins 5 grammes, de préférence 10 grammes de préférence encore d'au moins 20 grammes, par rapport à un fromage fondu témoin fabriqué dans les mêmes conditions mais sans DATEM.

### Procédé de fabrication de fromages fondus présentant un extrait-sec ≤40 %

L'invention concerne également un procédé de fabrication d'un fromage fondu présentant un extrait-sec ≤40 %, de préférence <40 %, ledit procédé comprenant les étapes consistant à :
a) obtenir un mélange comprenant, en poids par rapport au poids total du mélange :
   - au moins 5 %, de préférence 5 à 50 %, de préférence encore 10 à 40 %, de préférence encore 10 à 30 % d'au moins un fromage naturel ;
   - 0 à 50 %, de préférence 5 à 30 %, de préférence encore 10 à 20 %, de préférence encore 10 à 15 %, d'au moins une matière grasse ;
   - 0 à 40 %, de préférence 5 à 20 %, de préférence encore 10 à 15 %, d'au moins un composé sélectionné dans le groupe constitué de la poudre de lait entier et/ou partiellement ou totalement écrémé, la poudre de lactosérum, les caséines ;
   - 1 à 20 %, de préférence 1 à 10 %, de préférence encore 1 à 5 %, de concentrés de protéines laitières et/ou sériques ;
   - 0 0,5 à 3 %, de préférence 1 à 2 %, d'au moins un sel de fonte ;
   - 0,05 % à 1 % d'au moins un émulsifiant anionique, de préférence de 0,1 à 1 %, de préférence de 0,1 à 0,8 %, de préférence encore de 0,2 à 0,6 % ; et
   - de l'eau en quantité suffisante jusqu'à 100 % ;
b) fondre le mélange par traitement thermo-mécanique à une température ≥ 70°C pour obtenir un fromage fondu ; et
c) réaliser une stérilisation de type Ultra-Haute Température (UHT) ;
d) réaliser une étape de crémage, et
e) éventuellement, refroidir le fromage fondu à une température de 70-80°C et conditionner le fromage fondu ; ledit émulsifiant anionique étant du DATEM.

Le fromage naturel incorporé dans le mélange d'ingrédients pour la préparation du fromage fondu selon l'invention peut être n'importe quel fromage issu d'une première transformation du lait ou de concentrés laitiers, par coagulation enzymatique et/ou acide du lait ou des concentrés laitiers.

Souvent, différents fromages naturels sont mélangés pour préparer le fromage fondu, ces fromages pouvant être sélectionnés en fonction de leur type, goût, maturité, consistance, ou acidité, par exemple.

Généralement, le ou les fromages naturels utilisés sont des fromages à pâte pressée, et en particulier à pâte pressée non cuite tels que gouda, edam, cheddar, cantal, raclette, ou morbier, ou à pâte pressée cuite tels que emmental, gruyère, comté, beaufort. Toutefois, les fromages naturels les plus utilisés sont gouda, edam, cheddar, et emmental.

Le fromage naturel peut également être, ou le mélange de fromages naturels peut inclure, un fromage à pâte filée, tel que de la Mozarella.

De préférence la taille du (ou des) fromage(s) naturel(s) qui entrent dans le mélange est réduite, éventuellement après écroûtage, par râpage et/ou broyage.

Le fromage naturel peut éventuellement être, ou le mélange peut comprendre, des caillés frais ou des laits fermentés tels que le yaourt, le kéfir, le labneh. Ces derniers sont privilégiés dans le cadre de la fabrication de produits appartenant à la famille des fromages frais fondus. Dans ce cas le fromage naturel ou mélange de fromages naturels peut être constitué de caillés frais ou laits fermentés qui représentent alors généralement jusqu'à 80-85% du mélange d'ingrédients destiné à être fondu. Des caillés frais ou laits fermentés peuvent également être mélangés à des fromages naturels de type pâte pressée, en général à hauteur de 5-10% du mélange d'ingrédients destiné à être fondu.

De préférence, le procédé selon l'invention ne met pas en oeuvre de fromage de réemploi. Toutefois, jusqu'à 5% de fromage de réemploi, en poids par rapport au poids total du mélange, peut être incorporé en tant qu'auxiliaire technologique pour faciliter le démarrage du crémage.

Le mélange d'ingrédients peut contenir au moins une matière grasse, qui peut être une ou des matières grasses animales, telles que le beurre, la MGLA (matière grasse laitière anhydre), et la crème, et/ou une ou des matières grasses végétales telles que les huiles de colza, soja, arachide, tournesol, palme, palmiste, et coprah. La quantité de matière grasse animale et/ou végétale utilisée dépend de la teneur en matière grasse souhaitée pour le fromage fondu fini.

Le mélange peut également contenir de la poudre de lait, de la poudre de lactosérum, des caséines, ce qui permet d'apporter des constituants protéiques dans le fromage fondu.

L'utilisation des matières premières non fromagères dépend de leur disponibilité et de leur coût sur le marché car elles se substituent plus ou moins partiellement à la partie fromagère par leur apport protéique. L'homme de métier sait parfaitement ajuster la quantité de différentes matières premières selon le produit final à réaliser.

Le mélange peut avantageusement comprendre en outre 0,05 à 5%, de préférence de 0,1 à 3%, de préférence encore de 0,1 à 1%, d'au moins un hydrocolloïde, tel que les carraghénanes, le guar, la caroube, ou la gomme xanthane.

En particulier, un effet d'amélioration synergique de la fermeté est observé lorsque le DATEM est utilisé en combinaison avec un ou des carraghénane(s).

L'émulsifiant anionique est ajouté soit directement dans le mélange avant cuisson (traitement thermomécanique), soit, lorsque de la matière grasse est ajoutée, par incorporation préalable dans la matière grasse qui sera elle-même incorporée au mélange.

L'émulsifiant anionique DATEM peut être utilisé en présence d'un ou plusieurs sels de fonte traditionnels, tels que des phosphates et/ou citrates de sodium, de potassium, ou magnésium. Les sels de fonte sont préférentiellement utilisés à hauteur de 0,5 à 3% dans le mélange d'ingrédients.

Selon un mode décrit ici, les émulsifiants anioniques sont utilisés sans sel de fonte.

Le mélange d'ingrédients pour la préparation du fromage fondu peut également inclure par exemple des aromates, des éléments figurés, ou des colorants.

Par "éléments figurés", on entend des éléments qui présentent une forme, une texture, une couleur, ou un goût reconnaissable au sein du produit fromager. On citera, à titre d'exemples d'éléments figurés, l'ail, le persil, le poivre, l'échalote, le cumin, les éclats de noix, les noisettes, les olives, les herbes, les copeaux de légumes ou de fruits.

Plus spécifiquement, un mélange d'ingrédients selon l'invention peut comprendre 10 à 30 % d'un mélange de fromages naturels, en particulier de fromages à pâte pressée ; 10 à 15 % de matière grasse ; 10 à 15 % d'au moins un composé sélectionné dans le groupe constitué de la poudre de lait entier et/ou partiellement ou totalement écrémé, la poudre de lactosérum, et les caséines, en particulier 10 à 15 % de poudre de lait écrémé ; 1 à 5 % de concentrés protéiques laitiers et/ou sériques ; 1 à 3 % de sel(s) de fonte ; 0,2 à 0,6 % de DATEM et de l'eau en quantité suffisante jusqu'à 100%.

Un fromage fondu allégé obtenu par le procédé conforme à l'invention peut être préparé à partir d'un mélange d'ingrédients comprenant 10 à 30 % d'un mélange de fromages naturels, en particulier de fromages à pâte pressée ; 10 à 15 % d'au moins un composé sélectionné dans le groupe constitué de la poudre de lait entier et/ou partiellement ou totalement écrémé, la poudre de lactosérum, et les caséines, en particulier 10 à 15 % de poudre de lait écrémé ; 1 à 5 % de concentrés protéiques laitiers et/ou sériques ;1 à 3 % de sel(s) de fonte ; 0,2 à 0,6 % de DATEM et de l'eau en quantité suffisante jusqu'à 100%. Un autre mélange d'ingrédients selon l'invention peut comprendre 10 à 30 % d'un mélange de fromages naturels, en particulier de fromages à pâte pressée ; 10 à 15 % de matière grasse ; 10 à 15 % d'au moins un composé sélectionné dans le groupe constitué de la poudre de lait entier et/ou partiellement ou totalement écrémé, la poudre de lactosérum, et les caséines, en particulier 10 à 15 % de poudre de lait écrémé ; 1 à 5 % de concentrés protéiques laitiers et/ou sériques ; 1 à 3 % de sel(s) de fonte, 0,3 à 0,6 % de DATEM ; 0,2 % à 1 % d'au moins un hydrocolloïde et de l'eau en quantité suffisante jusqu'à 100 %.

Le traitement thermomécanique est mis en oeuvre à une température ≥ 80°C, de préférence à une température de 80-120°C, de préférence encore à 100-115°C, pendant une durée allant de quelques secondes à plusieurs minutes, selon la température utilisée.

La fonte du mélange d'ingrédients est réalisée typiquement dans un appareil de type cutter (par exemple ceux commercialisés sous la dénomination STEPHAN®) ou des appareils de type pétrin, mélangeur, malaxeur, cuiseur-mélangeur, co-malaxeur, extrudeur. Le traitement thermomécanique peut être effectué à des vitesses allant jusqu'à 1500 rpm.

Un mélange homogène est obtenu à l'issue de l'étape de fonte.

Le traitement thermomécanique est avantageusement suivi d'une stérilisation de type Ultra-Haute Température (UHT) jusqu'à 150°C et refroidissement à une température de 80-90°C. Par exemple le mélange fondu peut être traité sur un appareil UHT à 140°C pendant 3 sec, puis refroidi à 80°C par détente flash.

Lorsqu'une stérilisation UHT est mise en oeuvre, la stérilisation est alors suivie d'une étape de crémage au cours de laquelle se produisent des réactions de polymérisation protéique conduisant à la structuration du produit et son épaississement. Le crémage s'effectue généralement dans des réacteurs agités, où le fromage réside typiquement pendant au moins 10 minutes, de préférence au moins 15 minutes, à une température de 80-90°C avec une agitation d'environ 20 rpm.

Les produits seront conditionnés sous différents types d'emballage selon l'usage ultérieur et les habitudes locales (aluminium, barquettes, coupelles, pots de verre ou pots plastique, etc...) avant ou après refroidissement.

Généralement, le fromage fondu est conditionné à chaud dans son emballage avant d'être refroidi, typiquement jusqu'à 10-15°C, ce qui confère un avantage sur le plan de la sécurité alimentaire.

Les fromages fondus obtenus ont un extrait-sec de préférence ≤ 37 %, plus particulièrement ≤ 37 % si le G/S est compris entre 5 et 50 %. Préférentiellement, ledit fromage fondu présente un taux de matières grasses/extrait sec (G/S) compris entre 5 et 70 %, de préférence encore compris entre 5 et 55 % (bornes incluses).

Plus spécifiquement les fromages fondus obtenus par le procédé selon l'invention peuvent présenter les caractéristiques d'extrait-sec et de matières grasses (exprimé en gras/sec) suivantes :
- extrait-sec ≤ 33 % pour un G/S compris entre 5 et 30 %, ou
- extrait sec ≤ 37 %, de préférence 33%< extrait sec ≤ 37 % pour un G/S compris entre 30 et 50 %, ou
- extrait sec ≤ 40 %, de préférence 37%< extrait sec ≤ 40 % pour un G/S compris entre 50 et 70 %.

### Fromages fondus présentant un extrait-sec ≤40 %

La demande décrit également un fromage fondu susceptible d'être obtenu par le procédé de fabrication selon l'invention. Selon un mode décrit ici, le fromage fondu a été préparé par le procédé de fabrication selon l'invention.

La demande décrit aussi un fromage fondu présentant un extrait-sec ≤40 %, de préférence <40% qui contient des protéines, de la matière grasse et au moins un émulsifiant anionique, en particulier un mono/diglycéride esterifié par un acide organique ou des esters d'acide lactique estérifiés par des acides gras tels que décrits plus hauts. De façon avantageuse, ces composés peuvent remplacer jusqu'à 30 % de la quantité de protéines dans les formules de fromages fondus.

Ledit au moins un mono/diglycéride esterifié par un acide organique est un ester diacétyl-tartrique de mono/diglycérides (DATEM).

La teneur dudit au moins un émulsifiant anionique DATEM dans le fromage fondu est comprise entre 0,05 et 1 %, de préférence entre 0,1 et 1 %, de préférence entre 0,1 et 0,8 %, de préférence encore entre 0,2 et 0,6% en poids par rapport au poids total du fromage fondu (bornes incluses).

Le fromage fondu peut comprendre en outre 0,05 à 5 %, de préférence de 0,1 à 3 %, de préférence encore de 0,1 à 1 %, d'au moins un hydrocolloïde, tel que les carraghénanes, le guar, la caroube, ou la gomme xanthane. De préférence l'hydrocolloïde est un ou des carraghénane(s).

Les fromages fondus ont un extrait-sec de préférence ≤ 37 %, plus particulièrement ≤ 37 % si le G/S est compris entre 5 et 50 %. Préférentiellement, ledit fromage fondu présente un taux de matières grasses/extrait sec (G/S) compris entre 5 et 70 %, de préférence encore compris entre 5 et 55 % (bornes incluses).

Plus spécifiquement les fromages fondus peuvent présenter les caractéristiques d'extrait-sec et de matières grasses (exprimé en gras/sec) suivantes :
- extrait-sec ≤ 33 % pour un G/S compris entre 5 et 30 %, ou
- extrait sec ≤ 37 %, de préférence 33%< extrait sec ≤ 37 % pour un G/S compris entre 30 et 50 %, ou
- extrait sec ≤ 40 %, de préférence 37%< extrait sec ≤ 40 % pour un G/S compris entre 50 et 70 %.

Le fromage fondu peut incorporer au moins un sel de fonte traditionnel, tel que des phosphates et/ou citrates de sodium, de potassium, ou magnésium. La teneur en sels de fonte dans le fromage fondu est typiquement comprise de 0,5 à 3 %, en poids par rapport au poids total du fromage fondu. La teneur en sels de fonte dans le fromage fondu peut être encore de 1 à 2 %, en poids par rapport au poids total du fromage fondu.

Le fromage fondu peut également inclure dans sa formulation des aromates, des éléments figurés, des colorants, etc...

Par "éléments figurés", on entend des éléments qui présentent une forme, une texture, une couleur, ou un goût reconnaissable au sein du produit fromager. On citera, à titre d'exemples d'éléments figurés, l'ail, le persil, le poivre, l'échalote, le cumin, les éclats de noix, les noisettes, les olives, les herbes, les copeaux de légumes ou de fruits.

Les exemples présentés ci-après permettent à l'homme de métier de comprendre tout l'intérêt de l'utilisation de cette famille d'émulsifiants pour la fabrication de fromages fondus présentant un extrait-sec ≤ 40 %, plus spécifiquement ≤ 37 %.

L'emploi de DATEM (ou de CSL ou de SSL ne correspondant pas à l'invention) comme le montrent les exemples ci-dessous, permet d'obtenir des produits à faible extrait-sec (≤ 40 %) qui présentent une texture ferme tout en restant fondant en bouche et présentant de bonne propriétés de tartinabilité. L'emploi de DATEM, de SSL ou de CSL et plus généralement des émulsifiants anioniques, trouvent donc un l'intérêt particulier pour la préparation de fromages fondus à formulations allégées ou économiques, qui, autrement, présenteraient des défauts de fermeté.

Par ailleurs ils permettent de remplacer 30 %, préférentiellement 20 % des protéines (exprimé en pourcentage totale des protéines de la formule) dans des formules économiques.

### Exemple 1: Fabrication d'un fromage fondu ayant un extrait-sec de 37 % , une teneur en matière grasse de 45 % (exprimée en G/S) et une teneur en protéines de 10 %

Une formule témoin (A) est préparée ainsi que deux autres produits, B, C, ayant la même composition si ce n'est que la composition de B et de C incorpore 0,3 et 0,6 % de PANODAN A2020 (Danisco) (soit 0,24% et 0,48% de DATEM) (en poids par rapport au poids total du mélange).

Parallèlement on prépare une formule D identique à A excepté les teneurs en concentrés protéiques laitiers en poudre de lait écrémé qui ont été portées respectivement à 5% et 7%. La teneur en protéines de D est de 11,5%.

| | **% (en poids, par rapport au poids total du mélange)** | | | |
|---|---|---|---|---|
| **Ingrédients** | **A** | **B** | **C** | **D** |
| emmental | 8 | 8 | 8 | 8 |
| cheddar | 10 | 10 | 10 | 10 |
| beurre | 12,4 | 12,4 | 12 ,4 | 12,4 |
| poudre de lait écrémé | 10 | 10 | 10 | 7 |
| concentrés protéiques laitiers | 2 | 2 | 2 | 5 |
| polyphosphates de sodium | 2 | 2 | 2 | 2 |
| sel de cuisine | 0,4 | 0,4 | 0,4 | 0,4 |
| PANODAN A2020 | - | 0,3 | 0,6 | 0 |
| Eau | complément à 100 % | Complément à 100% | Complément à 100% | Complément à 100 % |

Le mélange des ingrédients est réalisé en cutter (STEPHAN®), puis traité sur un appareil UHT à 140°C pendant 3 sec, et refroidi à 85°C par détente flash. Le produit subit ensuite une étape de crémage, 15 minutes à 85°C et 20 rpm, avant d'être conditionné à chaud en portions sous aluminium.

Le pH des produits est de 5,5.

Un test de pénétrométrie est réalisé sur les 3 échantillons A, B et C, à J+7 (7 jours après la fabrication des produits), à 20°C sur appareil texturomètre STEVENS (Equipements scientifiques, France) (sonde de diamètre 6,35 mm/ course de 7 mm / Pénétration de 0,2 mm/s). Les résultats sont les suivants :
- A = 28 g
- B = 52 g
- C = 61 g
- D = 51 g

Les produits ont été dégustés par un panel d'experts avec les résultats suivants :
- A = produit mou et collant en bouche,
- B = ferme avec texture fondante,
- C = plus ferme que B mais texture fondante.
- D = ferme (équivalent B)

Par ailleurs les produits B et C sont dégagés plus facilement de l'aluminium.

En conclusion, les produits contenant du DATEM sont plus fermes mais présentent une texture extrêmement fondante, non pâteuse et non collante, ce qui n'est pas habituel pour les produits de cette consistance.

De plus, comme le montrent comparativement les essais B et D, DATEM permet de remplacer 3 % des concentrés protéiques laitiers du mélange soit 15% du pourcentage total des protéines dans les formules tout en gardant les caractéristiques organoleptiques et texturales du produit.

### Exemple 2 : Fabrication de produits allégés (ne faisant pas parti de l'invention)

On réalise selon le même protocole de l'exemple 1, trois fromages fondus allégés en matière grasse (extrait-sec de 32 % et teneur en G/S de 25 %).

La composition des produits est similaire à celle des produits A à C de l'exemple 1 à l'exception de la suppression de l'apport en beurre. Le témoin A est fabriqué sans CSL et les 2 essais (B et C) sont réalisés avec respectivement 0,2 et 0,6 % de CSL (Admul 2010® de la société Kerry)

| | **% (en poids, par rapport au poids total du mélange)** | | |
|---|---|---|---|
| **Ingrédients** | **A** | **B** | **C** |
| emmental | 8 | 8 | 8 |
| cheddar | 15 | 15 | 15 |
| poudre de lait écrémé | 10 | 10 | 10 |
| concentrés protéiques laitiers | 2 | 2 | 2 |
| polyphosphates de sodium | 2 | 2 | 2 |
| sel de cuisine | 0,4 | 0,4 | 0,4 |
| Admul 2010 | - | 0,2 | 0,6 |
| eau | Complément à 100 % | Complément à 100% | Complément à 100% |

Les résultats de mesure des tests de pénétrométrie, réalisés à J+4 à 20°C sur appareil texturomètre STEVENS (Equipements scientifiques, France) (sonde de diamètre 6,35 mm/ course de 7 mm / Pénétration de 0,2 mm/s), sont respectivement de 15, 24 et 29 grammes pour les produits A, B et C.

A la dégustation, les produits B et C ont été jugés plus fermes que A, et comme présentant une texture fondante.

### Exemple 3 : Fabrication de produit « économiques » (extrait-sec de 35% et teneur en G/S de 40%)

On réalise toujours selon le même protocole des fromages fondus dits « économiques ». A cet effet, on substitue le beurre par de la MGLA (matière grasse laitière anhydre) et on utilise, comme source protéique, 13 % de Cheddar, 2 % de caséine et 10 % de poudre de lait maigre.

Le témoin A est réalisé sans DATEM mais avec 2 % de sels de fonte, pour l'essai B on ajoute 0,2 % de carraghénanes ; pour l'essai C on ajoute 0,4 % de PANODAN A2020 (Danisco) (0,32 % DATEM), et pour l'essai D on ajoute 0,2 % de carraghénanes et 0,4 % de PANODAN 2020.

| | **% (en poids, par rapport au poids total du mélange)** | | | |
|---|---|---|---|---|
| **Ingrédients** | **A** | **B** | **C** | **D** |
| cheddar | 13 | 13 | 13 | 13 |
| matière grasse laitière anhydre | 12 | 12 | 12 | 12* |
| poudre de lait écrémé | 10 | 10 | 10 | 10 |
| caséine | 2 | 2 | 2 | 2 |
| polyphosphates de sodium | 2 | 3 | 2 | 2 |
| sel de cuisine | 0,4 | 0,4 | 0,4 | 0,4 |
| carraghénanes | - | 0,2 | - | 0,2 |
| PANODAN A2020 | - | - | 0,4 | 0,4 |
| eau | Complément à 100% | Complément à 100% | Complément à 100% | Complément à 100% |

Les résultats de mesures de pénétrométrie réalisées à J+10 à 20°C sur appareil texturomètre STEVENS (sonde de diamètre 6,35 mm/ course de 7 mm / Pénétration de 0,2 mm/s), sur les produits A à D sont les suivants :
A: 22 g
B: 25 g
C: 32g
D : 44 g.

Ces résultats montrent donc que le DATEM et les carraghénanes améliorent de façon synergique la fermeté d'un produit économique, à faible teneur en protéines et extrait sec.

## Revendications

1. Utilisation d'au moins un ester diacétyl-tartrique de mono/diglycérides (DATEM) pour la préparation d'un fromage fondu présentant un extrait-sec ≤ 40%, pour augmenter la fermeté dudit fromage fondu et pour réduire jusqu'à 30% la teneur totale en protéines de la formule dudit fromage fondu.

2. Utilisation selon la revendication 1, dans laquelle le fromage fondu présente un extrait-sec < 40%.

3. Utilisation selon l'une quelconque des revendications 1 à 2, dans laquelle la teneur dudit DATEM dans un mélange d'ingrédients utilisé pour la préparation dudit fromage fondu est comprise entre 0,05 et 1 % en poids, par rapport au poids total du mélange.

4. Utilisation selon l'une quelconque des revendications 1 à 3, dans laquelle ledit DATEM est utilisé en combinaison avec un ou des carraghénane(s).

5. Procédé de fabrication d'un fromage fondu présentant un extrait-sec ≤ 40%, ledit procédé comprenant les étapes consistant à :
a) obtenir un mélange comprenant, en poids par rapport au poids total du mélange :
- au moins 5% d'au moins un fromage naturel ;
- 0 à 50% d'au moins une matière grasse ;
- 0 à 40% d'au moins un composé sélectionné dans le groupe constitué de la poudre de lait entier et/ou partiellement ou totalement écrémé, la poudre de lactosérum, et les caséines ;
- 1 à 20% de concentrés de protéines laitières et/ou sériques ;
- 0,5 à 3% d'au moins un sel de fonte ;
- de 0,05 % à 1% d'au moins un émulsifiant anionique, et
- de l'eau pour compléter à hauteur de 100% ;
b) fondre le mélange par traitement thermo-mécanique à une température ≥ 70°C pour obtenir un fromage fondu ;
c) réaliser une stérilisation de type Ultra-Haute Température (UHT) ;
d) réaliser une étape de crémage, et
e) éventuellement, refroidir le fromage fondu à 70-80°C et conditionner le fromage fondu,
ledit émulsifiant anionique étant un ester diacétyl-tartrique de mono/diglycérides (DATEM).

6. Procédé selon la revendication 5, dans lequel le mélange de l'étape a) comprend :
- 5 à 20% d'au moins un composé sélectionné dans le groupe constitué de la poudre de lait entier et/ou partiellement ou totalement écrémé, la poudre de lactosérum, et les caséines.

7. Procédé selon l'une quelconque des revendications 5 à 6, dans lequel le fromage fondu est conditionné à l'étape d) sous aluminium, barquettes, coupelles, pots de verre ou pots plastique.

8. Procédé selon l'une quelconque des revendications 5 à 7, dans lequel ledit mélange comprend de 0,05 à 5% d'au moins un hydrocolloïde.

9. Procédé selon la revendication 8, dans lequel ledit hydrocolloïde est un carraghénane.

10. Procédé selon l'une quelconque des revendications 5 à 9, dans lequel ledit fromage fondu a un extrait-sec <40 %.

## Patentansprüche

1. Verwendung mindestens eines Diacetylweinsäureesters von Mono/Diglyceriden (DATEM) zur Herstellung eines Schmelzkäses mit einem Trockenextrakt von ≤ 40%, um die Festigkeit des Schmelzkäses zu erhöhen und um den Gesamtgehalt an Proteinen der Rezeptur des Schmelzkäses bis auf 30% zu reduzieren.

2. Verwendung gemäß Anspruch 1, wobei der Schmelzkäse ein Trockenextrakt von < 40% aufweist.

3. Verwendung gemäß einem der Ansprüche 1 bis 2, wobei der Gehalt des DATEM in der Mischung der Ingredienzien, welche für die Herstellung des Schmelzkäses verwendet werden, zwischen 0,05 und 1 Gew.-% liegt, bezogen auf das Gesamtgewicht der Mischung.

4. Verwendung gemäß einem der Ansprüche 1 bis 3, wobei der DATEM in Kombination mit einem oder mehreren Carrageenen verwendet wird.

5. Verfahren zur Herstellung eines Schmelzkäses mit einem Trockenextrakt von ≤ 40%, wobei das Verfahren die Schritte umfasst, bestehend aus:
a) Herhalten einer Mischung umfassend, bezogen auf das Gesamtgewicht der Mischung:
- mindestens 5% mindestens eines natürlichen Käses;
- 0 bis 50% mindestens eines Fetts;
- 0 bis 40% mindestens einer Verbindung ausgewählt aus der Gruppe bestehend aus Vollmilchpulver und/oder teilentrahmtem oder vollständig entrahmtem Milchpulver, Molkenpulver und Caseinen;
- 1 bis 20% Milch- und/oder Serumproteinkonzentrate;
- 0,5 bis 3% mindestens eines Schmelzsalzes;
- von 0,05 % bis 1% mindestens eines anionischen Emulgators, und
- Wasser, um auf eine Höhe von 100% zu vervollständigen;
b) Schmelzen der Mischung durch thermo-mechanische Behandlung bei einer Temperatur von ≥ 70°C, um einen Schmelzkäse zu erhalten;
c) Durchführen einer Sterilisation vom Typ Ultra-Hoch Temperatur (UHT);
d) Durchführen eines Schrittes der Eindickung, und
e) wahlweise Abkühlen des Schmelzkäses auf 70-80°C und Verpacken des Schmelzkäses,
wobei der anionische Emulgator ein Diacetylweinsäureester von Mono/Diglyceriden (DATEM) ist.

6. Verfahren gemäß Anspruch 5, wobei die Mischung aus Schritt a) umfasst: 5 bis 20 % mindestens einer Verbindung ausgewählt aus der Gruppe bestehend aus Vollmilchpulver und/oder teilentrahmtem oder vollständig entrahmtem Milchpulver, Molkenpulver und Caseinen.

7. Verfahren gemäß einem der Ansprüche 5 bis 6, wobei der Schmelzkäse in Schritt d) Aluminium-, Schälchen-, Schalen-, Glasgefäß- oder Kunststoffgefäß-verpackt ist.

8. Verfahren gemäß einem der Ansprüche 5 bis 7, wobei die Mischung von 0,05 bis 5% mindestens eines Hydrokolloids umfasst.

9. Verfahren gemäß Anspruch 8, wobei das Hydrokolloid ein Carrageen ist.

10. Verfahren gemäß einem der Ansprüche 5 bis 9, wobei der Schmelzkäse ein Trockenextrakt von <40% hat.

## Claims

1. Use of at least one diacetyl tartaric acid ester of monoglyceride (DATEM) for the preparation of a processed cheese with a solids content ≤ 40 %, in order to increase the firmness of said processed cheese and to reduce down to 30 % the total proteins content of the formula of said processed cheese.

2. Use according to claim 1, wherein the processed cheese has a solids content < 40 %.

3. Use according to claim 1 or 2, wherein the content of said DATEM in a mixture of ingredients used to prepare said processed cheese is in the range 0.05 to 1 % by weight, relative to the total weight of the mixture.

4. Use according to any one of claims 1 to 3, wherein said DATEM is used in combination with one or more than one carrageenan.

5. Method for the manufacture of a processed cheese with a solids content ≤ 40 %, said method comprising the steps consisting of:
a) obtaining a mixture comprising, by weight relative to the total weight of the mixture:
- at least 5 % of at least one natural cheese;
- 0 to 50 % of at least one fat;
- 0 to 40 % of at least one compound selected from the group consisting of whole milk powder and/or semi-skimmed or skimmed milk powder, whey powder, and caseins;
- 1 to 20 % of milk protein concentrates and/or whey protein concentrates;
- 0.5 to 3 % of at least one melting salt;
- 0.05 % to 1 % of at least one anionic emulsifier, and
- water to make the mixture up to 100 %;
b) processing the mixture by thermomechanical treatment at a temperature ≥ 70°C in order to obtain a processed cheese;
c) performing a sterilization of the type Ultra-High Temperature (UHT),
d) performing a creaming step, and
e) optionally, cooling the processed cheese to 70-80°C and packaging the processed cheese,
said anionic emulsifier being a diacetyl tartaric acid ester of monoglyceride (DATEM).

6. Method according to claim 5, wherein the mixture of step a) comprises:
- 5 to 20 % of at least one compound selected from the group consisting of whole milk powder and/or semi-skimmed or skimmed milk powder, whey powder, caseins.

7. Method according to any one of claims 5 to 6, wherein the processed cheese is packaged at step d) in aluminium, trays, cups, glass jars or plastic jars.

8. Method according to any one of claims 5 to 7, wherein said mixture comprises 0.05 to 5 % of at least one hydrocolloid.

9. Method according to claim 8, wherein said hydrocolloid is a carrageenan.

10. Method according to any one of claims 5 to 9, wherein said processed cheese has a solids content <40 %.
